# EUROPEAN PATENT APPLICATION

(11) **EP 1 780 866 A2**
(43) Date of publication of application: **02.05.2007**
(21) Application number: 06122989.4
(22) Date of filing: 26.10.2006
(51) Int. Cl.: H02J 7/00

(54) **Charger system for cordless power devices**

(30) Priority: 31.10.2005 US 731270 P
(71) Applicant: Black & Decker Inc., Newark, Delaware 19711 (US)
(72) Inventor: Casalena, Adam M., Baltimore, MD 21236 (US); White, Daniel J., Baltimore, MD 21220 (US); Phillips, Steven J., Ellicott City, MD 21042 (US); Howard, Geoffrey S., Columbia, MD 21045 (US); Watson, James B., Fallston, MD 21047 (US)
(74) Representative: Bell, Ian Stephen

(57) **Abstract**

A battery charger is provided which includes a housing formed by an upper housing half-shell and a lower housing half-shell connected together so that the half-shells align with one another, an opening for inserting a battery pack and an electrical cord extending form the housing. The upper and lower housing half-shells each include an indent area. The indent areas are in alignment with one another so that the electrical cord wraps around and occupies the indent areas. The lower housing half-shell includes a plurality of connections to secure a printed circuit board (PCB) therein to the half shell.

## Description

This U.S. non-provisional patent application claims priority to provisional application 60/731,270, filed October 31, 2005, the entire contents of which are hereby incorporated by reference.

Example embodiments relate generally to a battery charger for cordless power tools.

Cordless products which use rechargeable batteries are prevalent throughout the workplace as well as in the home. From house wares to power tools, rechargeable batteries are used in numerous devices. Ordinarily, nickel-cadmium, nickel metal-hydride and/or Lithium-ion battery cells are used in these devices. The devices typically use a plurality of battery cells, which may be packaged as battery packs. These battery packs may be coupled with the cordless devices and secured to the device. The battery pack may be removed from the cordless device and charged in a battery charger or charged in the cordless device itself.

As most cordless devices employ the use of battery chargers to recharge the battery packs, the design of the battery charger should be simple and easy to manufacture. Moreover, as the use of such batteries in our daily life is becoming more and more common, charging of rechargeable batteries and reliability of charging units are becoming significant. For instance, the design and manufacturing of these charging units should be simple and ergonomic. However, most charging units are merely used to charge batteries and stored away when the batteries are fully charged. Accordingly, there exists a need to replace the conventional charging unit with a charging unit that is multi-purpose or versatile, e.g., perform other functions.

In accordance to an example embodiment, a battery charger is disclosed. The battery charger may include a housing formed by an upper housing half-shell and a lower housing half-shell connected together so that the half-shells align with one another, an opening for inserting a battery pack, and an electrical cord extending form the housing. The upper and lower housing half-shells each may include an indent area, wherein the indent areas are in alignment with one another so that the electrical cord wraps around and occupies the indent areas.

In accordance with another example embodiment, a battery charger may include a housing formed by an upper housing half-shell and a lower housing half-shell connected together so that the half-shells align with one another. The lower housing half-shell may include a plurality of connectors to retain a printed circuit board (PCB) therein, and an electrical cord extending from the housing.

In accordance to another example embodiment, a battery charging unit may include a housing having an upper shell housing and a lower shell housing formed with a longitudinally extending parting line, and an opening for inserting a battery pack, wherein the upper shell housing including at least one linear blade retention area for holding a blade.

In accordance to another example embodiment, a battery charging unit may include a housing having an upper shell housing and a lower shell housing formed with a longitudinally extending parting line, and an opening for inserting a battery pack, wherein the upper shell housing including at least one linear blade retention area for holding a blade.

In accordance to another example embodiment, a battery charging unit may include a housing having an upper shell housing and a lower shell housing formed with a longitudinally extending parting line, and an opening for inserting a battery pack, wherein the housing including a note pad on a top surface of the upper shell housing.

In accordance to another example embodiment, a battery pack may include a LED light indicator on a top surface of the battery pack for indicating a status of the battery pack.

The present invention will become more apparent by describing, in detail, exemplary embodiments thereof with reference to the attached drawings, wherein like elements are represented by like reference numerals, which are given by way of illustration only and thus do not limit the example embodiments.
FIG. 1 is a schematic view of a battery charger in accordance with an exemplary embodiment of the present invention.
FIG. 2 is a schematic view of a battery charger in accordance with an exemplary embodiment of the present invention.
FIGS. 3 through 5 are side views of the charger in accordance with exemplary embodiments of the present invention.
FIG. 6 is a schematic view of a battery charger in accordance with another exemplary embodiment.
FIG. 7 is a schematic view of a battery pack and a battery charger in accordance with an exemplary embodiment.
FIG. 8 is a schematic view of a lower housing half-shell of the housing in accordance with an exemplary embodiment.

It should be noted that these Figures are intended to illustrate the general characteristics of the exemplary embodiments of the present invention, for the purpose of the description of such exemplary embodiments herein. These drawings are not, however, to scale and may not precisely reflect the characteristics of any given embodiment, and should not be interpreted as defining or limiting the range of values or properties of exemplary embodiments within the scope of the exemplary embodiments of the present invention. The relative dimensions and size of the cordless device, battery pack and/or battery charger may be reduced or exaggerated for clarity. Like numerals are used for like and corresponding parts of the various drawings.

As used herein, power tools may be understood as a cordless power tool with the use of light-weight portable power sources, such as, but not limited to, lithium-ion (Li-ion) battery packs that may provide the commensurate power with its use.

The battery pack may include a plurality of battery cells disposed within a housing of the battery pack. The battery pack may be embodied as at least one of a lithium ion (Li-ion), a nickel cadmium (NiCd), a nickel metal hydride (NiMH) and a lead-acid battery pack, for example, in terms of the chemistry makeup of individual cells, electrodes and electrolyte of the battery pack. The battery cells may be connected in series and/or parallel.

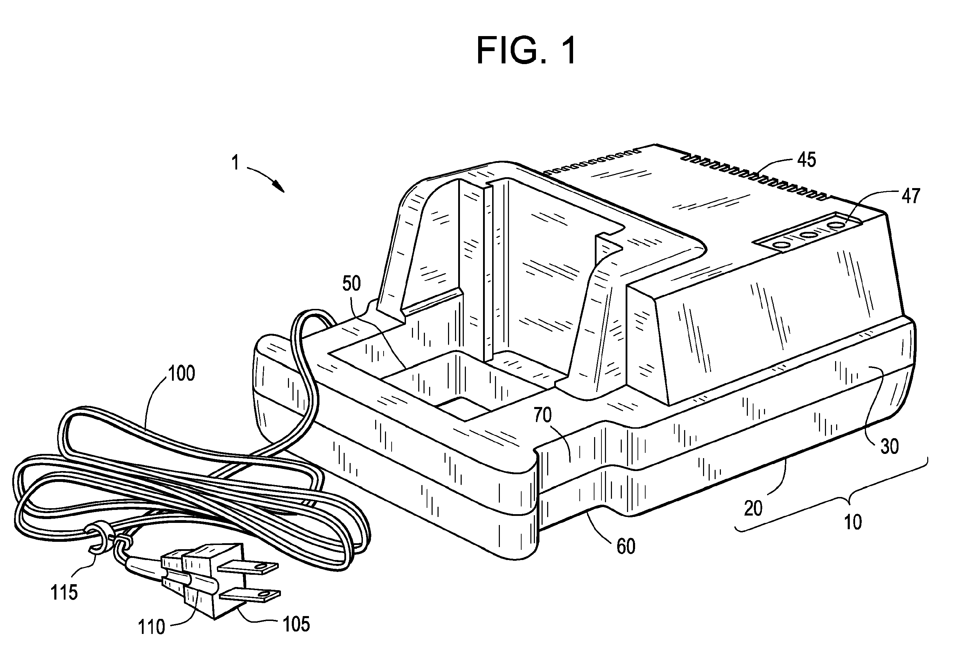

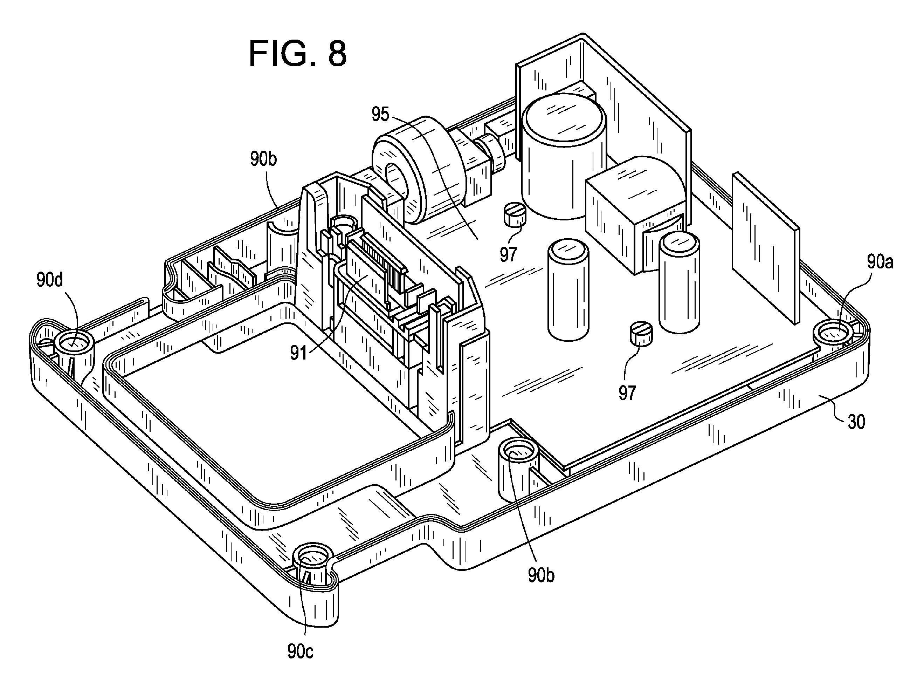

FIG. 1 is a schematic view of a battery charger in accordance with an exemplary embodiment. Referring to FIG. 1, the battery charger 1 includes a housing 10 formed by a lower housing half-shell 20 and an upper housing half-shell 30. The lower and upper half-shells 20, 30 may be formed by injection-molded plastics. A printed circuit board (PCB) (shown in FIG. 8) is disposed within housing 10 essentially extending parallel to the housing bottom. The PCB supports electrical components thereon. The upper housing half-shell 30 includes a plurality of slots or vents 45 on an upper edge surface of the upper housing 30 for ventilation, an LED indicator 47 for indicating the status of the battery charge, and an opening 50 for receiving the rechargeable battery to be inserted. The opening 50 can be dimensioned to fit a Li-ion battery pack, for example. Conductive terminals (not shown) may be provided in the opening 50 for interconnecting between the battery and a charger circuit for charging purposes and electrical communications.

It should be appreciated that the lower housing half-shell 20 may include additional openings or vents for additional ventilation.

It should further be appreciated that heat sink(s) may be included in the housing. The heat sink(s) may be embodied as a heat dissipater, a heat spreader, and/or a hermetic heat dissipater.

It should further be appreciated that the heat sink(s) may be any type of metallic sink with projecting portions that are metallic or made of a thermally conductive medium. Example thermally conductive materials include, but are not limited to potting compounds, gels and/or greases to extract the heat.

It should further be appreciated that a fan (not shown) may be included within the housing 10 to move the fluid through the battery charger 1. The fluid can be directed by the fan so as to enable components in the charger 1 to be cooled or heated. The fan can also be coupled to electronics powered by the battery cells, the charger 1, or both, to control cooling or heating. Further, the fan may include a motor (not shown) which may run off a battery or run off of the charger 1.

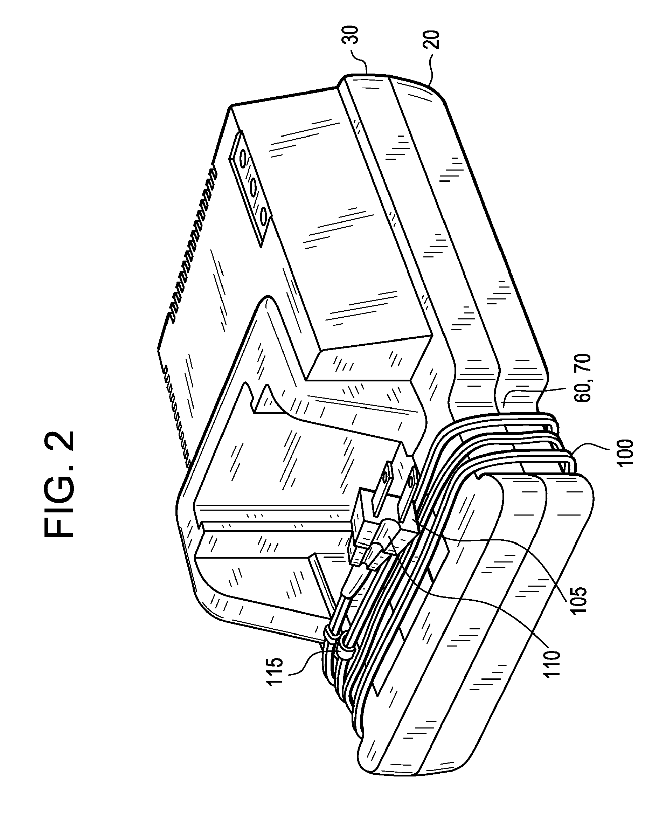

Referring to FIG. 2, an electrical cord 100 to be plugged into an A/C outlet extends from the housing 10. The lower housing half-shell 20 includes an indent area 60 near opening 50. The upper housing half-shell 30 also includes an indent area 70 that corresponds with indent area 60. In other words, when the half shells 20, 30 are connected to one another, indent areas 60, 70 are correspondingly aligned, as shown in FIG. 1. The indent areas 60, 70 are formed so that the electrical cord 100 wraps around and occupies the indent areas 60, 70 of the charger 1 to provide a convenient and orderly system of wrapping the cord 100 to the charger 1.

The electrical cord 100 includes a plug 105 which has a groove 110 formed therein to retain or lock a portion of the wrapped cord 100 therein. This prevents unwinding of the cord 100, or enables the wrapped cord 100 to be secured around the charger housing 10 within the indention formed by indent areas 60, 70. The electrical cord 100 also may be provided with a small fastener 115 (e.g., clip) to provide further locking of the cord 100.

It should be appreciated that the indent areas 60, 70 may be formed in other shape besides as shown in FIG. 2 as long the areas 60, 70 serve the function of securing the cord 100 around the housing 100 of the charging unit 1.

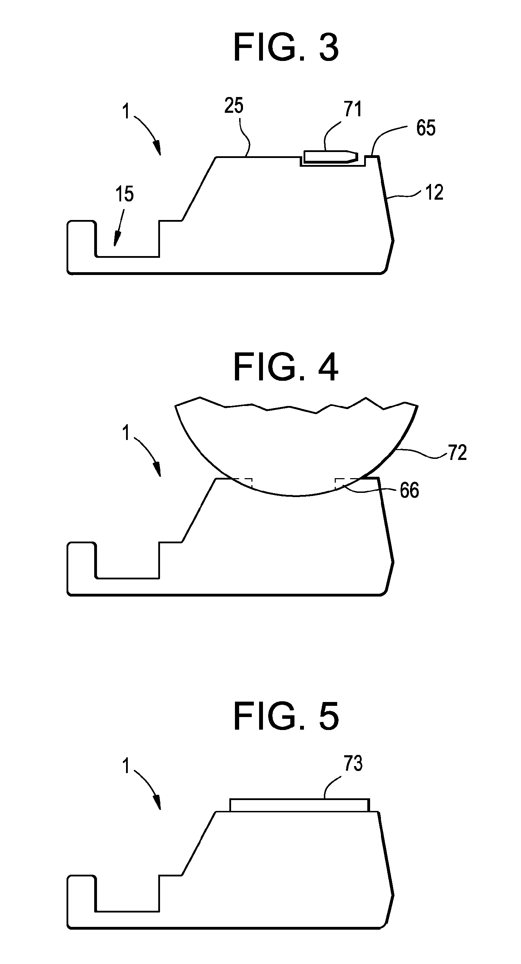

FIGS. 3 through 5 are side views of the charger in accordance with exemplary embodiments. As shown in FIG. 3, the battery charger 1 includes a battery insertion open portion 15 and a component housing portion 12. The component housing portion 12 is larger relative to the battery insertion open portion 15 due to heat sinks and other components (not shown) that are required to cool electronics within the component housing portion 12. The heat sinks may be positioned within the component housing 12 to transfer away heat created by the electronics, and expelled through the vent openings (not shown) located in the component housing portion 12.

Referring to FIG. 3, the component housing portion 12 includes a top surface 25. The top surface 25 may include a bit retention area 65 for holding tool accessories, such as, for example, drill bits or screws 71. The bit retention area 65 may be a slot formed by injection-molding with the component housing portion 12. The bit retention area 65 may also include a snap-fitting member formed in the slot. The snap-fitting member may be made from a metal material.

It should be appreciated that there may be more than one bit retention area on the top surface 25. To further reduce breakage of the bit retention area 65, there may be a metal insert (not shown) fitted therein.

Referring to FIG. 4, the component housing portion 12 of FIG. 4 includes a linear blade retention area 66 for holding a blade 72, such as a reciprocating saw blade and a jigsaw blade, for example. It should be appreciated that FIG. 4 is similar to FIG. 3 except for the component housing portion 12 having a linear blade retention area 66. The linear blade retention area 66 may be a slot formed by injection-molding with the component housing portion 12. The linear blade retention area 66 may also include a snap-fitting member formed in the slot. The snap-fitting member may be made from a metal material.

It should be appreciated that there may be more than one linear blade retention area on the top surface 25. To further reduce breakage of the linear blade retention area 66, there may be a metal insert (not shown) fitted therein.

Referring to FIG. 5, the top surface of the component housing portion 12 may further include a note pad 73 for allowing the user to write down notes, measurements and/or reminders. The note pad 73 may be a multi-sheet pad having self-adhesive tape, such as is used in office settings.

Thus, as illustrated in FIGS. 3-5, the battery charging unit 1 provides a central location for storing a variety of tool accessories and/or accessories, in addition to performing as a recharging station.

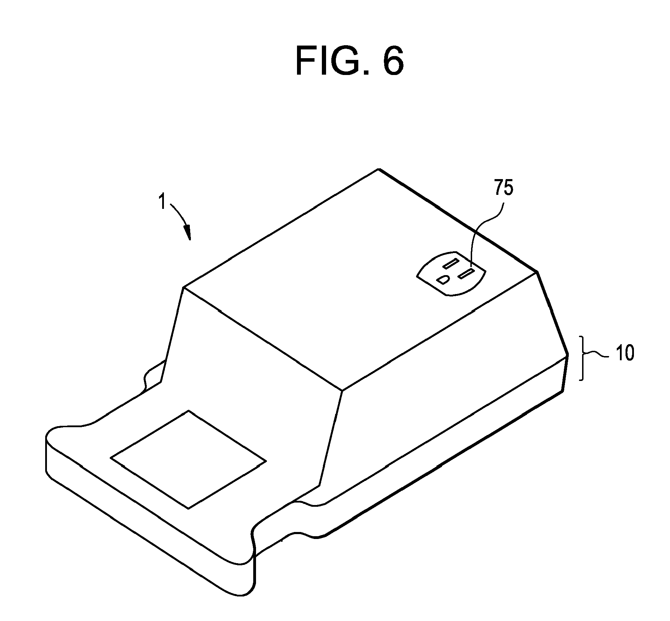

FIG. 6 is a schematic view of a battery charger in accordance with an exemplary embodiment. Referring to FIG. 6, the housing 10 of the charger 1 includes an A/C receptacle outlet 75 located on a top surface of the housing 10. The A/C receptacle outlet 75 on the housing 10 permits other A/C devices (e.g., power tools, other battery chargers, lighting, and etc.) to be plugged into the charger 1 while the charger 1 is plugged into an electrical outlet (not shown).

It should be appreciated that there may be more than one A/C receptacle outlet 75 on the housing 10, and that the A/C receptacle outlet 75 may be located at other places of the housing 10 besides the top surface.

It should further be appreciated that a D/C power source may be used rather than A/C.

Referring back to FIG. 1, the battery charger includes a LED display 47 on the housing 10. The LED display 47 provides an indication that the battery is fully charged by lighting the appropriate LED light. For example, the left-most LED light indicator may indicate that the battery requires a full charge, the middle LED light indicator may indicate that the battery is partially charged, and the right-most LED light indicator may indicate that the battery is fully charged.

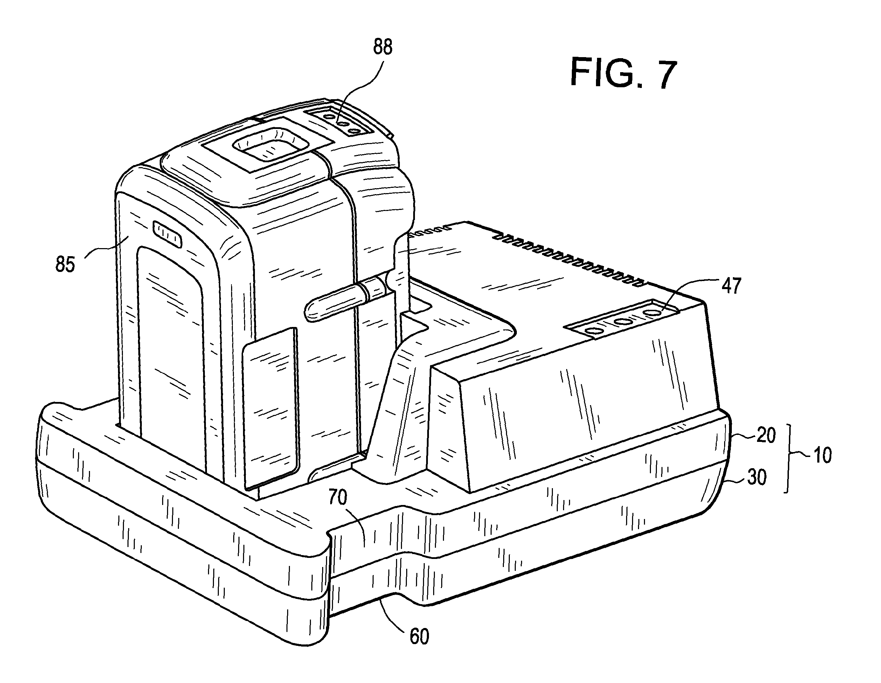

As shown in FIG. 7, the battery charger is similar to FIG. 1 except with the addition of a battery pack 85 inserted in the charger. The battery pack 85 also includes an LED display 88. The LED display 88 in the battery pack may be a three LED arrangement as similarly shown in FIG. 1 or a single LED with different color indicators (e.g., a red light indicates a full charge is required, a yellow light indicates a partial charge is required, and a green light indicates no charge is required). Because the battery pack 85 is generally the tallest part of the charging system, the position of the LED display 88 (e.g., status of the battery) is displayed near the top of the battery pack 85. This allows a user to see the status of the battery pack 85 from across a room and from 360 degrees around the charger 1 (e.g., adds height to the status light so that charger 1 status can be viewed over other objects which might obstruct the charger LED's from view).

The battery charger 1 may include an electronic circuit (not shown) within the housing 10 for controlling the LED display 88 of pack 85. When the battery pack 85 is fully charged, the electronic circuit within the charger will provide a signal to illuminate the LED display 88 for a fully charged indication. The electronic circuit in the charger 1 may also communicate with an electronic circuit (not shown) in the battery pack 85 when the battery pack 85 is inserted in the charger 1. The electronic circuit in the charger 1 may provide a status signal to the electronic circuit in the battery pack 85. The battery pack electronic circuit controls and communicates the signals to the charger 1, which is the power source of the LED display 88 on battery pack 85.

FIG. 8 is a perspective view of a lower housing half-shell in accordance with an exemplary embodiment. As shown in FIG. 8, the lower housing half-shell 20 is an injection-molded plastic piece including a plurality of holes 90A-90E, a terminal block 91 for interconnecting with a terminal block of a battery (not shown), and a printed circuit board (PCB) 95 disposed extending parallel to a housing bottom of the lower housing half-shell 20. The plurality of holes 90A-90E may correspond or align with plurality of holes (not shown) in the upper housing half-shell 30. Once the plurality of holes in the lower and upper housing half-shells 20, 30 are aligned, fasteners (e.g., screws, bolts) may be inserted to connect the upper and lower housings 20, 30 together. It should be appreciated that the upper and lower housings 20, 30 may connect in a tongue-and-groove design formed around an outer periphery of housing 10 between the two housings 20, 30.

The PCB 95 supports electrical components, such as capacitors, connectors, transformers and lights formed thereon. Components, and may be of any conventional design.

The lower housing half-shell 20 includes snap-on connectors 97 integrally formed and extending from the bottom surface of the lower housing half-shell 20 to engage the PCB 95. The PCB 95 includes openings for receiving the snap-on connectors 97. The snap-on connectors 97 are inserted into the openings in the PCB 95 to hold the PCB 95 in place within the charger housing 10. The snap-on connectors 97 may be formed as upstanding protrusions that provide structural strength to prevent the PCB 95 from moving, particularly upwardly in the vertical direction. Further, the snap-on fasteners 97 eliminate the need of fasteners (e.g., screws, bolts), as the snap-on fasteners 97 are integrally formed with the housing 10. This results in easier and faster assembly time of the PCB 95 therein, and lowers cost of manufacturing.

It should be appreciated that more than two snap-on connectors 97 may be employed, and the snap-on connectors 97 may be at other locations beside the ones shown in FIG. 8.

The exemplary embodiments being thus described, it will be obvious that the same may be varied in many ways. Such variations are not to be regarded as departure from the spirit and scope of the exemplary embodiments, and all such modifications as would be obvious to one skilled in the art are intended to be included within the scope of the described invention.

## Claims

1. A battery charging unit, comprising:
a housing formed by an upper housing half-shell and a lower housing half-shell corresponding to the upper housing half-shell;
an opening for inserting a battery pack; and
an electrical cord extending form the housing,
wherein the upper and lower housing half-shells each include an indent area, each of the indent areas correspond therewith, so that the electrical cord wraps around and occupies the indent areas.

2. The battery charging unit according to claim 1, wherein the housing includes at least one A/C receptacle outlet.

3. The battery charging unit according to claim 2, wherein the A/C receptacle outlet is located on a top surface of the upper housing half-shell.

4. The battery charging unit according to claim 1, wherein the housing includes at least one D/C receptacle outlet.

5. The battery charging unit according to claim 4, wherein the D/C receptacle outlet is located on a top surface of the upper housing half-shell.

6. The battery charging unit according to claim 1, wherein the upper housing half-shell includes a plurality of openings on an upper edge surface of the upper housing half-shell for ventilation.

7. The battery charging unit according to claim 1, wherein the upper housing half-shell includes a LED light indicator for indicating a status of the battery pack.

8. The battery charging unit according to claim 1, further comprising at least one securing device near a plug of the electrical cord for tightly securing the wrapped cord.

9. The battery charging unit according to claim 11, wherein the securing device is a clip.

10. A battery charging unit, comprising:
a housing formed by an upper housing half-shell and a lower housing half-shell corresponding to the upper housing half-shell, the lower housing half-shell includes connectors to engage a printed circuit board (PCB); and
an electrical cord extending form the housing,
wherein the upper and lower housing half-shells each include an indent area so that the electrical cord wraps around and occupies the indent areas.

11. The battery charging unit according to claim 10, wherein the connectors extend from a bottom surface of the lower housing half-shell.

12. The battery charging unit according to claim 11, wherein the connectors are upstanding protrusions.

13. The battery charging unit according to claim 12, wherein PCB includes openings to correspond and engage with the connectors extending from the bottom surface to provide structural strength and prevent movement of the PCB.

14. The battery charging unit according to claim 11, wherein the PCB is positioned parallel with the lower housing half-shell.

15. The battery charging unit according to claim 11, wherein the connectors are integrally formed with the lower housing half-shell.

16. The battery charging unit according to claim 11, wherein the connectors are snap-on connectors.

17. The battery charging unit according to claim 11, wherein the upper housing half-shell and the lower housing half-shell are engaged by a tongue-and-groove design.

18. A battery charging unit, comprising:
a housing having an upper shell housing and a lower shell housing formed with a longitudinally extending parting line; and
an opening for inserting a battery pack,
wherein the upper shell housing having with at least one bit retention area for holding a bit.

19. The battery charging unit according to claim 18, wherein the at least one bit retention area is a slot.

20. The battery charging unit according to claim 19, wherein the slot including a snap-fitting device.

21. The battery charging unit according to claim 20, wherein the snap-fitting device is made from a metal composite material.

22. A battery charging unit, comprising:
a housing having an upper shell housing and a lower shell housing formed with a longitudinally extending parting line; and
an opening for inserting a battery pack,
wherein the upper shell housing including at least one linear blade retention area for holding a blade.

23. The battery charging unit according to claim 22, wherein the at least one bit retention area is a slot.

24. The battery charging unit according to claim 23, wherein the slot including a snap-fitting device.

25. The battery charging unit according to claim 24, wherein the snap-fitting device is made from a metal composite material.

26. A battery charging unit, comprising:
a housing having an upper shell housing and a lower shell housing formed with a longitudinally extending parting line; and
an opening for inserting a battery pack,
wherein the housing including a note pad on a top surface of the upper shell housing.

27. The battery charging unit according to claim 26, wherein the note pad is adhesively attached to the upper shell housing.

28. The battery charging unit according to claim 27, wherein the note pad is a self-adhesive multi-sheet note pad.

29. A battery pack, comprising:
a LED light indicator on a top surface of the battery pack for indicating a status of the battery pack.

30. The battery pack according to claim 29, wherein the LED light indicator is a three LED different colors indicator.
